# EUROPÄISCHE PATENTSCHRIFT

(11) **EP 2 686 588 B1**
(45) Veröffentlichungstag und Bekanntmachung des Hinweises auf die Patenterteilung: **03.10.2018**
(21) Anmeldenummer: 12700106.3
(22) Anmeldetag: 09.01.2012
(51) Int. Cl.: F16K 1/36, F02M 59/36, F02M 59/44, F02M 63/00

(54) **VENTILEINRICHTUNG ZUM SCHALTEN ODER ZUMESSEN EINES FLUIDS**
VALVE DEVICE FOR SWITCHING OR METERING A FLUID
DISPOSITIF FORMANT SOUPAPE PERMETTANT DE COUPLER OU DE DISTRIBUER UN FLUIDE

(30) Priorität: 14.03.2011 DE 102011005485
(43) Veröffentlichungstag der Anmeldung: 22.01.2014
(73) Patentinhaber: Robert Bosch GmbH, 70442 Stuttgart (DE)
(72) Erfinder: DEPONTE, Rene, 74372 Sersheim (DE); GERUNDT, Oliver, 71292 Friolzheim (DE); EICHENDORF, Andreas, 70374 Stuttgart (DE); HALLER, Juergen, 74343 Sachsenheim (DE); BRUNNER, Dominik, 70563 Stuttgart (DE)
(86) Internationale Anmeldenummer: PCT/EP2012/050220
(87) Internationale Veröffentlichungsnummer: WO 2012/123130

(56) Entgegenhaltungen:
- EP-A1- 1 471 248
- EP-A2- 1 717 446
- WO-A1-2010/073040
- DE-A1- 19 834 121
- DE-A1-102008 000 658
- DE-A1-102009 026 939
- JP-A- 2009 275 540
- US-A1- 2005 211 224

## Beschreibung

### Stand der Technik

Die Erfindung betrifft eine Ventileinrichtung nach dem Oberbegriff des Anspruchs 1 sowie ein Verfahren nach dem nebengeordneten Patentanspruch.

Ventileinrichtungen, beispielsweise Mengensteuerventile eines Kraftstoffsystems einer Brennkraftmaschine, sind vom Markt her bekannt. Häufig weisen solche Ventileinrichtungen einen Ventilkörper auf, der von einer Ventilnadel beispielsweise in Offenstellung beaufschlagt werden kann. In geschlossenem Zustand der Ventileinrichtung ist der Ventilkörper an einem Dichtabschnitt gegen einen gehäuseseitigen Dichtsitz angeschlagen. Der Ventilkörper ist beispielsweise plattenartig ausgebildet, wodurch er eine vergleichsweise geringe Masse aufweisen kann.

Bei vielen Mengensteuerventilen ist die Ventileinrichtung in der Saugphase einer Kraftstoff-Hochdruckpumpe geöffnet. In der anschließenden so genannten Rückströmphase wird die Ventileinrichtung beispielsweise mittels einer durch Federkraft beaufschlagten Ventilnadel für eine bestimmte Zeitspanne weiterhin zwangsweise offen gehalten. In der an die Rückströmphase anschließenden Förderphase der Kraftstoff-Hochdruckpumpe wird beispielsweise ein Elektromagnet bestromt, wodurch die Ventilnadel von dem Ventilkörper abheben und die Ventileinrichtung - häufig unterstützt durch eine Ventilfeder - somit schließen kann.

Patentveröffentlichungen aus diesem Fachgebiet sind beispielsweise die DE 10 2008 000 658 A1, die DE 10 2009 026 939 A1, die EP 1 471 248 A1, die DE 10 2008 043 237 A1, die DE 10 2007 034 038 A1, die DE 10 2007 028 960 A1, die DE 10 2005 022 661 A1, die DE 10 2004 061 798 A1, die DE 2004 016 554 A1, die DE 101 24 238 A1, die EP 1 701 031 A1, die EP 1 471 248 A1, und die EP 1 296 061 A2.

### Offenbarung der Erfindung

Das der Erfindung zugrunde liegende Problem wird durch eine Ventileinrichtung nach Anspruch 1 sowie durch ein Verfahren nach dem nebengeordneten Anspruch gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die erfindungsgemäße Ventileinrichtung hat den Vorteil, dass Toleranzen oder Abnutzungen an einem Dichtabschnitt und/oder einem Dichtsitz nicht oder nur unwesentlich zu Veränderungen einer Strömungskraft an einem Ventilkörper bei geöffneter Ventileinrichtung führen können. Weiterhin kann ein Abheben des Ventilkörpers beim Öffnen der Ventileinrichtung besonders gleichmäßig und definiert erfolgen. Außerdem ist die erfindungsgemäße Ventileinrichtung kostengünstig herstellbar.

Die Erfindung geht von der Überlegung aus, dass ein Ventilkörper in einem Strömungskanal der Ventileinrichtung außer durch die Kräfte einer Ventilnadel und einer Ventilfeder auch durch hydraulische Strömungskräfte beaufschlagt wird. Insbesondere bei Mengensteuerventilen, wie sie beispielsweise in einem Kraftstoffsystem einer Brennkraftmaschine bzw. eines Kraftfahrzeugs verwendet werden, sind die hydraulischen Strömungskräfte vergleichsweise groß und wirken daher auf die Funktion des Mengensteuerventils mit ein.

Erfindungsgemäß wird ein an dem Ventilkörper angeordneter Dichtabschnitt so ausgeführt, dass er eine dem zugehörigen gehäusefesten Dichtsitz zugewandte Oberfläche des Ventilkörpers wenigstens geringfügig überragt, beispielsweise in der Art eines sich axial erstreckenden ringförmigen Kragens. Dadurch wird eine Voraussetzung dafür geschaffen, dass mechanische Toleranzen in einer Umgebung eines durch den Dichtabschnitt und den Dichtsitz gebildeten Dichtbereichs die an dem Ventilkörper angreifenden Strömungskräfte nicht oder nur geringfügig verändern können. Dies ist insbesondere während der so genannten "Rückströmphase" des Mengensteuerventils von Bedeutung, bei welcher ein Fluidstrom von einem Förderraum der von dem Mengensteuerventil gesteuerten Kraftstoffpumpe möglichst ungehindert zurück in den Niederdruckbereich gefördert werden soll. Dabei wird der Ventilkörper vorzugsweise allein von der Ventilnadel bzw. einer die Ventilnadel beaufschlagenden Feder in der Offenstellung gehalten.

Eine Ausgestaltung der Erfindung sieht vor, dass der Ventilkörper und der Dichtabschnitt einstückig hergestellt sind. Dadurch kann der Ventilkörper bzw. der Dichtabschnitt besonders präzise, dauerfest und kostengünstig hergestellt werden.

Weiterhin ist vorgesehen, dass der Dichtsitz in einer Umgebung des Dichtbereichs im Wesentlichen plan ausgeführt ist. Somit weist die erfindungsgemäße Ventileinrichtung nur eine einzige hydraulisch wirksame "Dichtkontur", nämlich an dem Dichtabschnitt des Ventilkörpers auf. Außerdem kann der Dichtsitz besonders einfach und engtoleriert hergestellt werden.

Eine weitere Ausgestaltung der Erfindung sieht vor, dass die funktionalen Elemente der Ventileinrichtung im Wesentlichen rotationsymmetrisch ausgeführt sind und der Dichtabschnitt Teil eines radial umlaufenden Ringstegs bzw. Kragens ist. Diese Geometrie ist - insbesondere bei Mengensteuerventilen - strömungstechnisch besonders günstig. Weiterhin wird dadurch erreicht, dass der Dichtbereich eine im Wesentlichen konstante Fläche aufweist, welche nahezu unabhängig von einem eventuellen radialen Versatz des Ventilkörpers in Bezug auf eine Längsachse der Ventileinrichtung und/oder unabhängig von Abnutzungen des Dichtabschnitts ist. Somit kann das Öffnen der Ventileinrichtung gleichmäßig und definiert erfolgen und die Menge des fluiden Mediums (Kraftstoff) besonders genau bemessen werden.

Erfindungsgemäß ist in dem Strömungskanal eine fluidisch wirksame Abschirmung angeordnet, welche den Ventilkörper bei einer Rückströmung des Fluids bei zwangsweise vom Dichtsitz abgehobenem Ventilkörper zumindest teilweise von einer Strömung des Fluids abschirmen kann. Dadurch kann der von dem Dichtsitz abgehobene Ventilkörper zusammen mit dem Dichtabschnitt aus dem Bereich der stärksten Strömung entfernt werden. Entsprechend wird der Ventilkörper vergleichsweise wenig durch hydraulische Strömungskräfte in Schließrichtung beaufschlagt. Damit wird erfindungsgemäß die Voraussetzung dafür geschaffen, dass eventuelle mechanische Toleranzen des Ventilkörpers oder des Dichtabschnitts nicht - oder nur vernachlässigbar - diese Strömungskräfte verändern können. Auf diese Weise arbeitet die Ventileinrichtung besonders präzise und langzeitstabil.

Eine weitere Ausgestaltung der Ventileinrichtung sieht vor, dass in einer Umgebung des Dichtbereichs eine Begrenzungswand des Strömungskanals eine Rundung oder eine Fase aufweist. Das bei geöffneter Ventileinrichtung in dem Dichtbereich radial nach innen bzw. radial nach außen strömende Fluid (Kraftstoff) kann mittels der Rundung oder der Fase mit besonders geringen Strömungsverlusten in die bzw. aus der axialen Richtung umgelenkt werden. Dadurch kann der hydraulische Wirkungsgrad der Ventileinrichtung weiter verbessert werden.

Ergänzend wird vorgeschlagen, dass der Ventilkörper eine axiale und in etwa kalottenartige Ausnehmung aufweist, an welcher eine Ventilnadel anschlagen kann. Dadurch kann eine im Betrieb der Ventileinrichtung sich ergebende konkave Verformung des Ventilkörpers an der Anschlagstelle der Ventilnadel sozusagen konstruktiv vorweggenommen werden. Die Präzision und die Dauerfestigkeit der Ventileinrichtung können somit zusätzlich erhöht werden.

Weiterhin wird ein Verfahren zur Herstellung des Ventilkörpers der Ventileinrichtung vorgeschlagen, wobei der Ventilkörper mittels Fließpressen derart hergestellt wird, dass ein durch das Fließpressen verdrängtes Material - insbesondere aus dem Bereich der kalottenartigen Ausnehmung - mindestens teilweise zur Ausformung des radial umlaufenden Ringstegs beiträgt. Dadurch kann der Ventilkörper besonders kostengünstig gefertigt werden.

Nachfolgend werden beispielhafte Ausführungsformen der Erfindung unter Bezugnahme auf die Zeichnung erläutert. In der Zeichnung zeigen:
- Figur 1: ein vereinfachtes Schema eines Kraftstoffsystems einer Brennkraftmaschine eines Kraftfahrzeugs;
- Figur 2: eine vereinfachte Schnittdarstellung einer ersten Ausführungsform einer Ventileinrichtung von Figur 1 in geöffnetem Zustand;
- Figur 3: eine vereinfachte Schnittdarstellung einer zweiten Ausführungsform der Ventileinrichtung in geschlossenem Zustand; und
- Figur 4: eine vereinfachte Schnittdarstellung einer dritten Ausführungsform der Ventileinrichtung in geschlossenem Zustand .

Es werden für funktionsäquivalente Elemente und Größen in allen Figuren auch bei unterschiedlichen Ausführungsformen die gleichen Bezugszeichen verwendet.

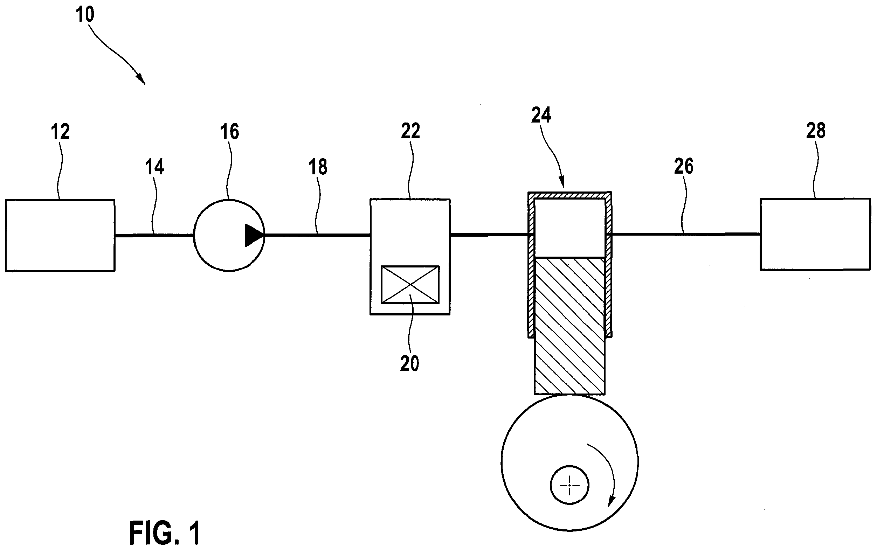

Figur 1 zeigt ein Kraftstoffsystem 10 einer Brennkraftmaschine in einer stark vereinfachten Darstellung. Aus einem Kraftstofftank 12 wird Kraftstoff über eine Saugleitung 14, mittels einer Vorförderpumpe 16, über eine Niederdruckleitung 18, und über eine von einem Elektromagneten 20 betätigbare Ventileinrichtung 22 - welche vorliegend ein Mengensteuerventil ist - einer (hier nicht weiter erläuterten) Hochdruckpumpe 24 zugeführt. Stromabwärts ist die Hochdruckpumpe 24 über eine Hochdruckleitung 26 an einen Hochdruckspeicher 28 angeschlossen. Sonstige Elemente, wie beispielsweise Auslassventile der Hochdruckpumpe 24, sind in der Figur 1 nicht gezeichnet. Es versteht sich, dass die Ventileinrichtung 22 bzw. das Mengensteuerventil als Baueinheit mit der Hochdruckpumpe 24 ausgebildet sein kann. Beispielsweise kann das Mengensteuerventil ein Einlassventil der Hochdruckpumpe 24 sein. Außerdem kann das Mengensteuerventil auch eine andere Betätigungseinrichtung als den Elektromagneten 20 aufweisen, beispielsweise einen Piezoaktor oder eine hydraulische Betätigung.

Beim Betrieb des Kraftstoffsystems 10 fördert die Vorförderpumpe 16 Kraftstoff vom Kraftstofftank 12 in die Niederdruckleitung 18. Dabei bestimmt das Mengensteuerventil die einem Förderraum der Hochdruckpumpe 24 zugeführte Kraftstoffmenge.

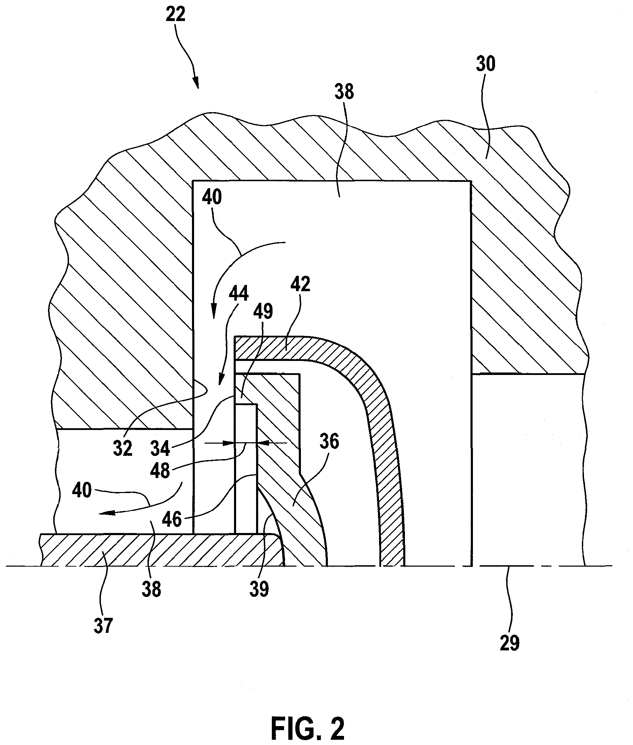

Figur 2 zeigt eine erste Ausführungsform der Ventileinrichtung 22 von Figur 1 in einer vereinfachten Schnittdarstellung. Die in der Zeichnung dargestellten Elemente der Ventileinrichtung 22 sind im Wesentlichen rotationsymmetrisch um eine Längsachse 29 ausgeführt und umfassen ein Gehäuse 30 mit einem im Wesentlichen plan ausgeführten Dichtsitz 32, an dem bei geschlossener Ventileinrichtung 22 ein Dichtabschnitt 34 eines in etwa plattenförmigen Ventilkörpers 36 anliegen kann. In der Figur 2 ist die Ventileinrichtung 22 jedoch geöffnet, das heißt, der Ventilkörper 36 ist von dem Dichtsitz 32 axial abgehoben. Eine Ventilnadel 37 beaufschlagt den Ventilkörper 36 in der Zeichnung nach rechts. Dabei ruht ein Endabschnitt der Ventilnadel 37 in einer kalottenartigen Ausnehmung 39 des Ventilkörpers 36. In der Ventileinrichtung 22 ist ein Strömungskanal 38 ausgebildet, durch den in der gezeigten Offenstellung Fluid - vorliegend Kraftstoff - entlang von Pfeilen 40 strömt. Eine fluidisch wirksame Abschirmung 42 ist stromaufwärts des Ventilkörpers 36 in dem Strömungskanal 38 derart angeordnet, dass sie den bei einer Rückströmung des Fluids zwangsweise vom Dichtsitz 32 abgehobenen Ventilkörper 36 zumindest teilweise von einer Strömung des Fluids abschirmen kann.

Der Dichtsitz 32 und der Dichtabschnitt 34 sind flächig und parallel zueinander ausgeführt und bilden gemeinsam einen Dichtbereich 44. Der Dichtabschnitt 34 überragt eine dem Dichtsitz 32 zugewandte Oberfläche 46 des Ventilkörpers 36 um ein Maß 48. Der Ventilkörper 36 weist in einem radial äußeren Abschnitt somit einen radial umlaufenden Ringsteg 49 bzw. sich axial erstreckenden Kragen auf. Zwischen dem Ventilkörper 36 beziehungsweise dem Ringsteg 49 und der Abschirmung 42 ist ein radialer Spalt (ohne Bezugszeichen) ausgebildet, so dass der Ventilkörper 36 ungehindert von der Abschirmung 42 axial bewegt werden kann. Eine in der Zeichnung rechts von dem Ventilkörper 36 angeordnete Ventilfeder, welche den Ventilkörper 36 führt, ist in der Figur 2 nicht mit dargestellt.

Man erkennt, dass entsprechend den Pfeilen 40 der Kraftstoff während der in der Figur 2 dargestellten Rückströmphase der Ventileinrichtung 22 im Wesentlichen von rechts nach links (also von der Hochdruckpumpe 24 zurück in die Niederdruckleitung 18) strömt. Dabei verläuft die Strömung zuerst in etwa horizontal und wird danach vor dem Ventilkörper 36 bzw. der Abschirmung 42 radial nach innen umgelenkt. Anschließend wird die Strömung im linken unteren Bereich der Zeichnung wiederum axial umgelenkt.

Weiterhin ist zu erkennen, dass der Ventilkörper 36 und ebenso der Dichtabschnitt 34 aufgrund der fluidisch wirksamen Abschirmung 42 aus dem Bereich der stärksten Strömung entfernt sind. Entsprechend beeinflussen mechanische Toleranzen des Ventilkörpers 36 - insbesondere in einer Umgebung des Dichtabschnitts 34 - Strömungskräfte, welche auf den Ventilkörper 36 wirken, nicht oder vergleichsweise gering. Auch Toleranzen des Maßes 48 sind vergleichsweise unerheblich.

Insgesamt weist der Dichtabschnitt 34 eine ringförmige Kontur auf. Daraus ist ersichtlich, dass ein mögliches radiales Spiel des Ventilkörpers 36 in Bezug auf die Längsachse 29 eine im geschlossenen Zustand der Ventileinrichtung 22 sich zwischen dem Dichtsitz 32 und dem Dichtabschnitt 34 ausbildende Berührfläche nicht verändert. Somit kann ein nachfolgendes Abheben des Ventilkörpers 36 von dem Dichtsitz 32 unabhängig von dem möglichen radialen Spiel gleichmäßig und präzise erfolgen. Dieser Zustand der Ventileinrichtung 22 ist in der Figur 2 jedoch nicht gezeigt.

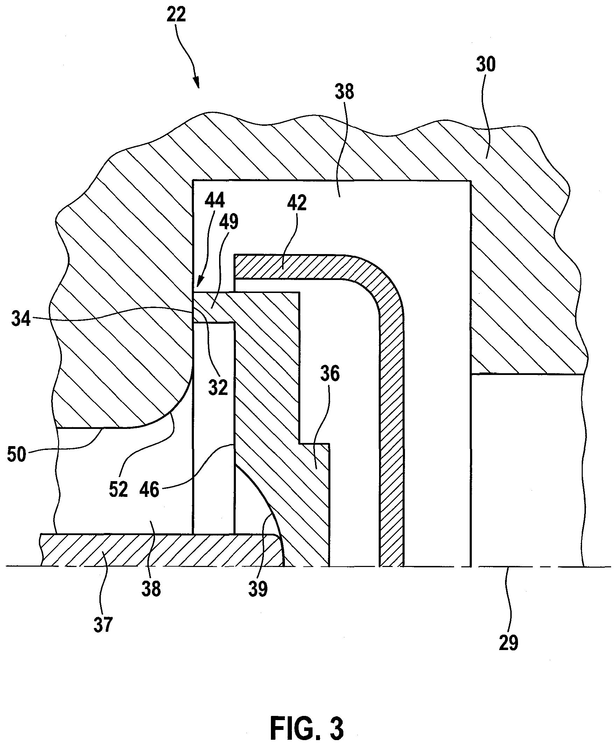

Figur 3 zeigt eine weitere und zu der Figur 2 ähnliche Ausführungsform der Ventileinrichtung 22. Dabei befindet sich die Ventileinrichtung 22 im geschlossenen Zustand, das heißt, der Ventilkörper 36 ist mit dem Dichtabschnitt 34 an dem gehäusefesten Dichtsitz 32 axial angeschlagen. Eine Begrenzungswand 50 des Strömungskanals 38 weist in der Zeichnung unterhalb des Dichtbereichs 44 eine Rundung 52 auf.

Die Rundung 52 bewirkt bei geöffneter Ventileinrichtung 22, dass die in dem Strömungskanal 38 fließende hydraulische Strömung besonders verlustarm von der radialen in die axiale Richtung - oder umgekehrt - umgelenkt werden kann. Alternativ kann die Rundung 52 auch als Fase oder als vorgelagerte Kante ausgeführt sein. Dies ist in der Figur 3 jedoch nicht gezeigt.

Vorliegend ist der Ventilkörper 36 mittels Fließpressen derart hergestellt, dass ein durch das Fließpressen verdrängtes Material - insbesondere aus dem Bereich der kalottenartigen Ausnehmung 39 - teilweise zur Ausformung des Ringstegs 49 beitrug.

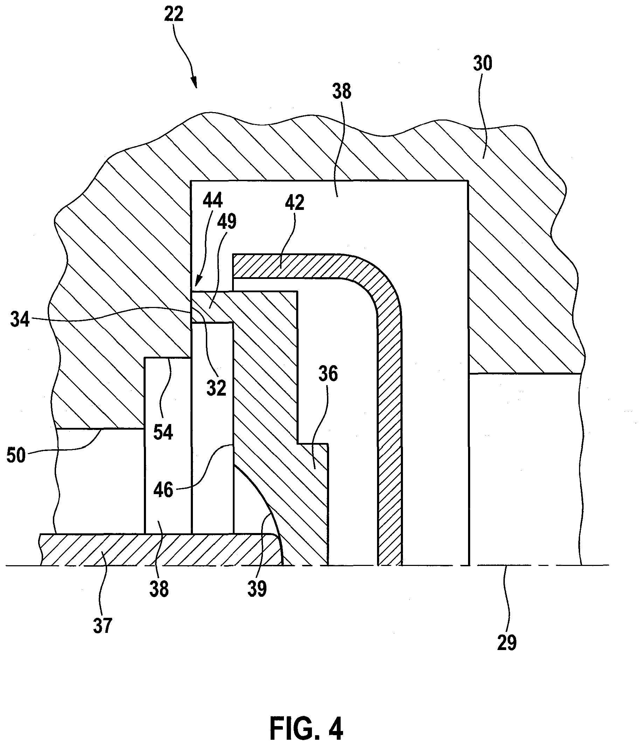

Figur 4 zeigt eine weitere und zu der Figur 3 ähnliche Ausführungsform der Ventileinrichtung 22. Im Unterschied zu der Figur 3 weist die Ausführungsform der Figur 4 an Stelle der Rundung 52 eine vorgelagerte Kante 54 auf.

## Patentansprüche

1. Ventileinrichtung (22) zum Schalten oder Zumessen eines Fluids, mit einem Gehäuse (30), einem Strömungskanal (38) und einem in dem Strömungskanal (38) angeordneten Ventilkörper (36), der einen Dichtabschnitt (34) aufweist, der bei geschlossener Ventileinrichtung (22) an einem gehäuseseitigen Dichtsitz (32) anliegt wobei der Dichtabschnitt (34) eine dem Dichtsitz (32) zugewandte Oberfläche (46) des Ventilkörpers (36) wenigstens geringfügig überragt, **dadurch gekennzeichnet, dass** in dem Strömungskanal (38) eine fluidisch wirksame Abschirmung (42) angeordnet ist, welche den Ventilkörper (36) bei einer Rückströmung des Fluids bei zwangsweise vom Dichtsitz (32) abgehobenem Ventilkörper (36) zumindest teilweise von einer Strömung des Fluids abschirmen kann, sodass der von dem Dichtsitz (32) abgehobene Ventilkörper (36) zusammen mit dem Dichtabschnitt (34) aus dem Bereich der stärksten Strömung entfernt werden kann.

2. Ventileinrichtung (22) nach Anspruch 1, **dadurch gekennzeichnet, dass** der Ventilkörper (36) und der Dichtabschnitt (34) einstückig hergestellt sind.

3. Ventileinrichtung (22) nach Anspruch 1 oder 2, **dadurch gekennzeichnet, dass** der Dichtsitz (32) in einer Umgebung eines Dichtbereichs (44) im Wesentlichen plan ausgeführt ist.

4. Ventileinrichtung (22) nach wenigstens einem der vorhergehenden Ansprüche, **dadurch gekennzeichnet, dass** die funktionalen Elemente der Ventileinrichtung (22) im Wesentlichen rotationsymmetrisch ausgeführt sind und der Dichtabschnitt (34) Teil eines radial umlaufenden Ringstegs (49) ist.

5. Ventileinrichtung (22) nach wenigstens einem der vorhergehenden Ansprüche, **dadurch gekennzeichnet, dass** in einer Umgebung des Dichtbereichs (44) eine Begrenzungswand (50) des Strömungskanals (38) eine Rundung (52) oder eine Fase oder eine vorgelagerte Kante (54) aufweist.

6. Ventileinrichtung (22) nach wenigstens einem der vorhergehenden Ansprüche, **dadurch gekennzeichnet, dass** der Ventilkörper (36) eine axiale und in etwa kalottenartige Ausnehmung (39) aufweist, an welcher eine Ventilnadel (37) anschlagen kann.

7. Verfahren zur Herstellung eines Ventilkörpers (36) der Ventileinrichtung (22) nach wenigstens einem der vorhergehenden Ansprüche, **dadurch gekennzeichnet, dass** der Ventilkörper (36) mittels Fließpressen derart hergestellt wird, dass ein durch das Fließpressen verdrängtes Material mindestens teilweise zur Ausformung eines radial umlaufenden Ringstegs (49) beiträgt.

## Claims

1. Valve device (22) for switching or metering a fluid, having a housing (30), having a flow channel (38) and having a valve body (36) which is arranged in the flow channel (38) and which has a sealing section (34) which, when the valve device (22) is closed, bears against a sealing seat (32) on the housing, wherein the sealing section (34) projects at least slightly beyond a surface (46), facing towards the sealing seat (32), of the valve body (36), **characterized in that**, in the flow channel (38), there is arranged a fluidically active shield (42) which, in the event of a backflow of the fluid in the case of the valve body (36) having been forcibly lifted off the sealing seat (32), can at least partially shield the valve body (36) from a flow of the fluid, such that the valve body (36) lifted off the sealing seat (32) can, together with the sealing section (34), be moved out of the region of the most intense flow.

2. Valve device (22) according to Claim 1, **characterized in that** the valve body (36) and the sealing section (34) are produced in one piece.

3. Valve device (22) according to Claim 1 or 2, **characterized in that** the sealing seat (32) is of substantially planar design in a vicinity of a sealing region (44).

4. Valve device (22) according to at least one of the preceding claims, **characterized in that** the functional elements of the valve device (22) are of substantially rotationally symmetrical design, and the sealing section (34) is part of a radially encircling ring-shaped web (49).

5. Valve device (22) according to at least one of the preceding claims, **characterized in that**, in a vicinity of the sealing region (44), a delimiting wall (50) of the flow channel (38) has a rounding (52) or a bevel or an upstream edge (34).

6. Valve device (22) according to at least one of the preceding claims, **characterized in that** the valve body (36) has an axial and approximately spherical-cap-shaped recess (39) which can be abutted against by a valve needle (37).

7. Method for producing a valve body (36) of the valve device (22) according to at least one of the preceding claims, **characterized in that** the valve body (36) is produced by means of extrusion such that a material displaced as a result of the extrusion at least partially contributes to the formation of a radially encircling ring-shaped web (49) .

## Revendications

1. Système de soupape (22) pour connecter ou doser un fluide, comprenant un boîtier (30), un canal d'écoulement (38) et un corps de soupape (36) disposé dans le canal d'écoulement (38) qui présente une portion d'étanchéité (34) qui, lorsque le système de soupape (22) est fermé, s'applique contre un siège d'étanchéité (32) du côté du boîtier, la portion d'étanchéité (34) faisant au moins légèrement saillie au-delà d'une surface (46) du corps de soupape (36) tournée vers le siège d'étanchéité (32), **caractérisé en ce que** dans le canal d'écoulement (38) est disposé un blindage (42) à action fluidique qui peut protéger le corps de soupape (36) au moins en partie contre un écoulement de fluide dans le cas d'un reflux de fluide lorsque le corps de soupape (36) est soulevé par force par le siège d'étanchéité (32), de telle sorte que le corps de soupape (36) soulevé par le siège d'étanchéité (32), conjointement avec la portion d'étanchéité (34), puisse être écarté de la région de plus fort écoulement.

2. Système de soupape (22) selon la revendication 1, **caractérisé en ce que** le corps de soupape (36) et la portion d'étanchéité (34) sont fabriqués d'une seule pièce.

3. Système de soupape (22) selon la revendication 1 ou 2, **caractérisé en ce que** le siège d'étanchéité (32) est réalisé sous forme essentiellement plane dans un environnement d'une région d'étanchéité (44) .

4. Système de soupape (22) selon au moins l'une quelconque des revendications précédentes, **caractérisé en ce que** les éléments fonctionnels du système de soupape (22) sont réalisés essentiellement avec une symétrie de révolution et la portion d'étanchéité (34) fait partie d'une nervure annulaire radialement périphérique (49).

5. Système de soupape (22) selon au moins l'une quelconque des revendications précédentes, **caractérisé en ce qu'**une paroi de limitation (50) du canal d'écoulement (38) présente, dans un environnement de la région d'étanchéité (44), un arrondi (52) ou un biseau ou une arête préliminaire (54).

6. Système de soupape (22) selon au moins l'une quelconque des revendications précédentes, **caractérisé en ce que** le corps de soupape (36) présente un évidement axial (39) et approximativement en forme de calotte contre lequel peut buter un pointeau de soupape (37).

7. Procédé de fabrication d'un corps de soupape (36) du système de soupape (22) selon au moins l'une quelconque des revendications précédentes, **caractérisé en ce que** le corps de soupape (36) est fabriqué par extrusion de telle sorte qu'un matériau repoussé par extrusion contribue au moins en partie à la formation d'une nervure annulaire radialement périphérique (49).
